# EUROPEAN PATENT SPECIFICATION

(11) **EP 0 877 663 B1**
(45) Date of publication and mention of the grant of the patent: **20.06.2001**
(21) Application number: 96943233.5
(22) Date of filing: 23.12.1996
(51) Int. Cl.: B29C 55/08, B29D 7/01, B29C 41/26

(54) **Process and apparatus for the production of oriented cellulosic films**
Verfahren und Vorrichtung zur Herstellung von orientierten Zellulose-Folien
Procédé et dispositif pour la fabrication des films de cellulose presentant une orientation biaxiale

(30) Priority: 02.01.1996 GB 9600006
(43) Date of publication of application: 18.11.1998
(73) Proprietor: TENCEL LIMITED, Spondon, Derby DE21 7BP (GB)
(72) Inventor: ASKEW, Gregory, James, Coventry CV6 6FP (GB); LAW, Stephen, John, Warwickshire CV10 9JQ (GB); STREET, Heather, Coventry CV3 5AG (GB); HAWLEY, Keith, Nigel, Wilkinson, Hinckley, Leicester LE10 3HP (GB)
(74) Representative: Newby, Martin John
(86) International application number: GB9603215
(87) International publication number: WO9724215

(56) References cited:
- EP-A- 0 662 283
- DE-A- 4 421 482
- FR-A- 2 546 810
- US-A- 2 483 339

## Description

This invention concerns processes for the production of oriented cellulosic film and apparatus for the production of oriented film.

Cellulose films are known, the films being produced by converting cellulose pulp into viscose, for example as cellulose xanthate, and then extruding the viscose through a slot die into a regenerating bath in which the extrudate is converted into a film of regenerated cellulose, for example by reaction of cellulose xanthate with a dilute mineral acid. The films produced have desirable properties, particularly good physical properties, good optical properties, feel, twist and fold retention, and an ability to allow moisture vapour to pass through the films without perforating them. This has resulted in regenerated cellulose films being used extensively as packaging materials in addition to various uses in other industries.

Despite the good physical properties of regenerated cellulose film, they do have certain disadvantages compared with films made from synthetic polymers. Thus, although the water vapour permeability of regenerated cellulose films can be an advantage in some end uses, in many if not most uses it is a disadvantage. Furthermore, the tensile strength of regenerated cellulose films is often relatively low when compared with that of synthetic polymer films, especially when the films are wet. This has led to a decline in the world-wide market for regenerated cellulose films and to a very significant increase in the market for synthetic polymer films.

The present invention seeks to provide means for obtaining cellulose films with improved physical properties compared with prior art regenerated cellulose films.

According to the present invention there is provided a process for the production of oriented cellulosic film, the process comprising extruding or casting a web of a solution of cellulosic material in a solvent therefor onto an extensible surface to which it adheres, stretching the web in at least one direction by stretching the extensible surface in at least said one direction, and removing solvent from the web.

Biaxially oriented cellulosic film produced by the process of the invention has its orientation imparted by the stretching, preferably sequential stretching, of a web of a solution of cellulosic material in a solvent in two directions before removing solvent from the web to form the film.

Biaxially oriented films produced in this way may have substantially balanced properties in the two directions. Alternatively, the properties may be unbalanced, as in the case of membranes. The bi-axial directions are preferably perpendicular to each other.

Non-derivatised oriented cellulose films produced in accordance with the present invention have particularly good physical properties when compared with regenerated cellulose films produced by the xanthate process. Non-derivatised cellulose is cellulose that is formed from a solution of cellulose in a suitable solvent, typically an amine oxide solvent, and is defined in US-A-5,277,857. In particular, oriented non-derivatised cellulose films produced in accordance with the invention have high tensile strengths in both the longitudinal and transverse directions. Substantially similar strengths to those of films produced by the viscose process can therefore be achieved with thinner films produced in accordance with the present invention.

Preferably the cellulosic solution is extruded through a slot die.

The cellulosic solution is extruded onto a surface, for example an elastomeric surface, to which it adheres and which is extensible (expandable), and the web is stretched in at least one direction, for example in a direction transverse to the direction of extrusion, by stretching the extensible surface in said direction. When the extensible surface is stretched in a direction transverse to the direction of extrusion and the web is also stretched in the direction of extrusion biaxially oriented film is obtained.

The cellulosic material in solution in the solvent may be cellulose dissolved in a tertiary-amine-N-oxide solvent for cellulose, preferably N-methyl-morpholine-N-oxide. The concentration of cellulose in the solvent is preferably from 2 to 25 percent (w/w), and more preferably from 4 to 18 percent (w/w) and typically about 15%. The degree of polymerization of the cellulose is preferably from 200 to 5000, and more preferably from 400 to 1000.

Cellulose films are preferably produced in accordance with the present invention by extruding a flat web of a solution of cellulose in a tertiary-amine-N-oxide solvent through a slot die on to a surface to which the solution can adhere, the surface being moved away from the die more quickly than the web is being extruded, so that the web is stretched in the direction of extrusion. Stretching of the web in the transverse direction is then effected by stretching the surface to which the web has adhered transversely to the direction of extrusion of the web. Thereafter, the solvent for the cellulose is leached out of the biaxially stretched web to produce a film of biaxially oriented cellulose.

Sequential stretching of the cellulose solution enables the degrees of orientation in the two directions to be controlled independently of each other. Stretch ratios in the direction of extrusion will usually be at least 1.5:1, typically at least 3:1, although they can be considerably higher, for example up to at least 25:1. Stretch ratios in the transverse direction will likewise usually be at least 1.5:1, and again they can be considerably higher, for example at least 3:1 or more, e.g. at least 8:1.

The overall area stretch ratio of the web will therefore usually be at least 2.25:1, but considerably higher stretch ratios can be achieved, for example up to 10:1 or more, e.g. up to 25:1.

Associated with increasing surface area of the web by stretching is a consequential reduction in the thickness of the web. This can enable particularly thin films to be produced. For example, an extruded web 150*µ*m thick can be stretched to form a resultant film of 25*µ*m or less, or a 25*µ*m thick web can be stretched to form a film of 5-10*µ*m or less, according to the degree of stretching in the longitudinal and transverse directions. Furthermore, the physical properties of the films in the longitudinal and transverse directions can be controlled by selecting the relative ratios of stretching in the longitudinal and transverse directions whilst providing the desired overall area stretch ratio.

Although the thickness of the extruded web can be varied fairly widely, for example from 20 to 1000*µ*m, excessively thick webs can be difficult to control since they can become physically unstable between the orifice of the slot die and the surface on to which the web is being extruded, leading to breakage of the web. Furthermore, thick stretched webs can be difficult to regenerate. Excessively thin webs tend to be too thin to allow significant increases in stretch ratio without web breakage or breakage of the resultant films. A web thickness of 150*µ*m before stretching has been found suitable.

Leaching of the tertiary-amine-N-oxide solvent from the biaxially stretched web to produce a biaxially oriented cellulose film can be effected using water or dilute solutions of the amine oxide in water. It is also possible to regenerate the film in other non-solvents, such as ethanol, to make porous regenerated materials. It has been found that the leaching process facilitates separation of the resultant film from the surface on which the web has been stretched.

If desired, the web can be treated with one or more gas flows between the extrusion die and the surface on which the web is to be stretched transversely. Such treatments could include air or other gas, of varying temperature, optionally containing some level of moisture to produce a humidified environment. The gas flow could be arranged into a plurality of flows of different composition and/or temperature to provide regions of different treatment. The length of the gap between the die face and the web take-up can be varied, so that the extruded web travels through the conditioned atmosphere for different timescales. Such environments can optionally be extended to include treatment of the gel web whilst in contact with the extensible surface before immersion into the regeneration bath.

According co another aspect of the invention there is provided apparatus for the production of oriented film, especially biaxially oriented film, the apparatus including an expandable surface onto which a web of polymer solution may be cast or extruded and to which it adheres, the surface being expandable to stretch the web adhered thereto in at least one direction.

Conveniently, the expandable surface is an elastomeric surface, and if is preferably an external elastomeric sleeve on an eccentric cylindrical drum having inclined rigid ends and a trapezoidal longitudinal cross-section, stretching of the sleeve being effected by rotation of the rigid ends with each other.

The apparatus may be used for cast film in general and it is preferably used in combination with an extrusion device for extruding a substantially flat web of a solution of polymeric material on to the expandable surface.

The polymer solution is preferably a cellulosic solution, especially a solution of cellulose in amine oxide to produce a non-derivatised film.

The apparatus may also include a solvent removal means for removal of solvent from the solution to produce the film.

The apparatus could also be used for other films, e.g. of cellulose acetate, carboxymethyl cellulose, cellulose nitrate and other cellulose derivatives.

Embodiments of apparatus in accordance with the present invention will now be described with reference to the accompanying drawings, in which:-
Figure 1 is a schematic vertical section through an embodiment of apparatus according to the present invention with some parts omitted for clarity;
Figure 2 is a plan of the apparatus of Figure 1 in the course of producing a film in accordance with the present invention;
Figure 3 is a side view of the apparatus of Figures 1 and 2 with some parts omitted for clarity; and
Figures 4 and 5 illustrate schematically alternative constructions for the drum shown in Figure 1.

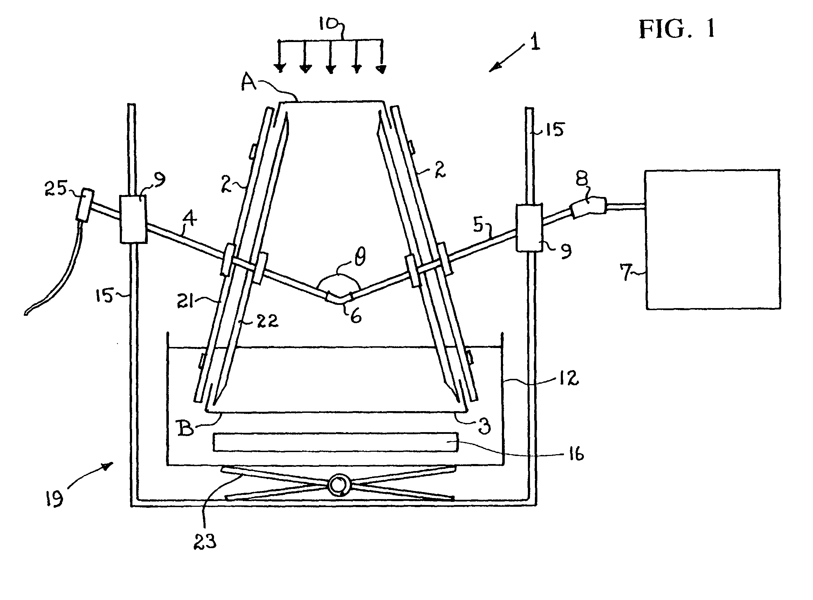

Referring to Figure 1, the apparatus includes a drum shown generally at 1 having rigid circular ends 2 connected by a resilient cylindrical sleeve 3 made of an elastomeric material. Suitable elastomeric material may comprise one of polyisobutylene, natural rubber, chloroprene, silicone rubber and styrene butadiene rubbers. Each of the circular ends 2 is mounted on an axial shaft 4,5, the shafts 4,5 being connected by a universal joint 6 or by some other joint means. The joint 6 allows the angle θ between the shafts to be varied, and the transfer of motion from one to the other is accomplished so that the angular velocity is constant during rotation. Such joints could include constant velocity joints, Hooke's joints or even gear boxes. By altering the respective mounting positions of the ends 2 along the length of the shafts 4 and 5, the drum 1 can be made to assume a substantially trapezoidal cross-sectional shape as shown in Figure 1.

The shafts 4 and 5 are supported by self-aligning bearings 9 mounted in flanges 15 so that rotation of the shaft 5 causes the drum 1 to rotate. The flanges 15 are formed on a housing 19 in which the drum is housed.--- Since the ends 2 are not parallel to each other, rotation of the shaft 5 first stretches the cylindrical sleeve 3 and then allows it to contract as a point on the surface of the sleeve 3 moves from the position indicated at "A" to the position indicated by "B", and then back to "A". The degree of stretch of the band 3 will vary according to the position of the cylinder ends 2 on the shafts 4 and 5 and the angle *θ* between the shafts. Rotation of the shaft 5 is effected using a motor 7 via a universal joint 8. The ends 2 each comprise a pair of circular plates 21,22 made from a suitable material, e.g. polymethyl methacrylate (perspex) or stainless steel, and are bolted together with the end of the sleeve 3 held clamped between the plates 21 and 22.

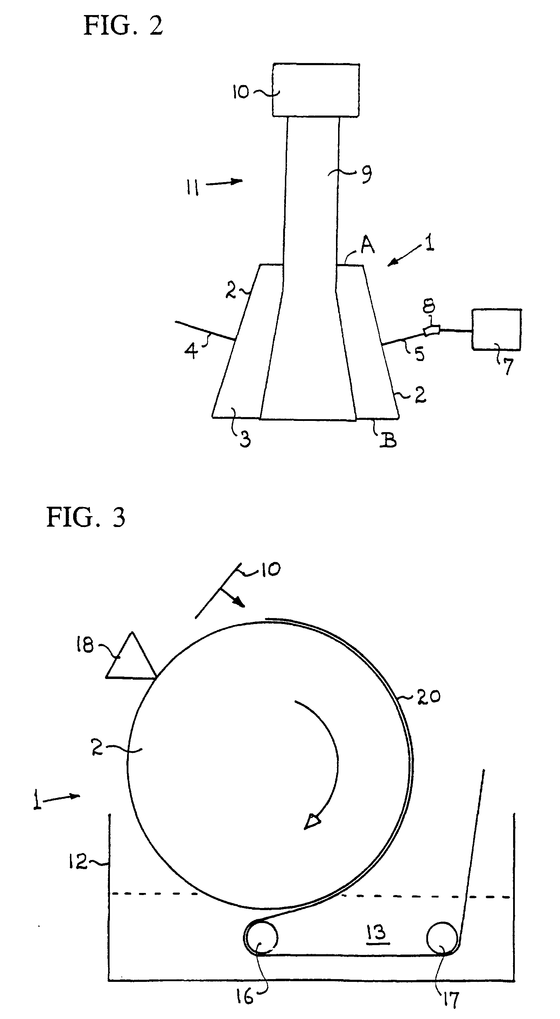

With reference also to Figure 2 the drum 1 is shown being used to produce a biaxially oriented cellulose film. A web 20 of a solution of cellulose in N-methylmorpholine-N-oxide is extruded from an extruder 10 having a slot die orifice. The web 20 passes through an air gap 11 and then contacts the sleeve 3 to which it adheres. Preferably the die is located about 10 mm from the surface of the drum.

The speed of rotation of the motor 7 is adjusted so that the peripheral speed of the sleeve 3 is faster than the rate of extrusion of the web 20, thereby stretching and orienting the web 20 in the direction of extrusion. A typical surface linear speed might be 60 meters/minute so that a drum of 1.33 meters diameter would rotate 14 revolutions per minute.

The trapezoidal cross-section of the drum 1 causes the web 20 adhered to the sleeve 3 to expand transversely as the sleeve 3 itself expands on rotation of the drum 1 about the shafts 4 and 5. Biaxial stretching of the web 9 is thereby effected. The drum may have a length of 0.5 meters at its upper surface as shown, and a length of 1.5 meters at its lower surface.

The stretching of the elastomeric sleeve 3 may lead to its concavity. This can be overcome by introducing compressed air into the drum 1 via the shaft 4, which may be hollow, and a rotational connector 25.

With reference to Figure 3 the drum 1 is located in a bath 12 of water 13 or aqueous amine oxide solution in which the amine oxide does not exceed 70% by weight and is more typically about 25%. The amine oxide solvent is leached from the web 20 to leave a biaxially oriented cellulose film which readily separates from the sleeve 3 due to the film being less adhesive than the web 20 to the sleeve 3. The film is taken off the drum 1 passing over a pair of guide rollers 16 and 17. The bath 12 rests on a height adjustment mechanism 23, such as a scissor jack, which supports the bath at variable heights above the base of the housing 19.

Since water from the bath 12 tends to be carried on the surface of the sleeve 3 after it leaves the bath 12, an air knife 18 is provided to remove any water carry-round, which could prevent the web 20 from adhering to the sleeve 3.

The resultant oriented film can then be subjected to various treatments, for example further washing, bleaching, drying and coating, before being wound up into a roll. Additionally the film can be treated with reactive chemical treatments, e.g. cross linking agents, dyes and/or softeners.

The film may include materials typically incorporated into film, e.g. antiblocks, colorants/fillers etc..

Sequentially stretched non-derivatised cellulose film produced on the above apparatus (Samples 2 and 3) was tested for tensile strength and for comparison with the tensile properties of film which has to be drawn in the direction of extrusion only.

The samples were cut from the film and tested on an Instron Tensile testing machine at 20° and 65% relative humidity, at an extension rate of 200 mm/minute.

| Sample | MD ratio | TD ratio | MD Tensile Strength Kg/mm² | TD Tensile Strength Kg/mm² |
|---|---|---|---|---|
| 1 | 6.1 | 2.6 | 18.7 | 15.8 |
| 2 | 3.7 | 2.8 | 10.9 | 10.1 |
| 3 | 4.0 | 0 | 20.4 | 4.5 |
| TD = transverse draw | | | | |
| MD = machine direction draw | | | | |

Thus it can be seen that a transverse draw ratio of about 2.5:1 produces at least a doubling of the transverse strength in the cellulose film.

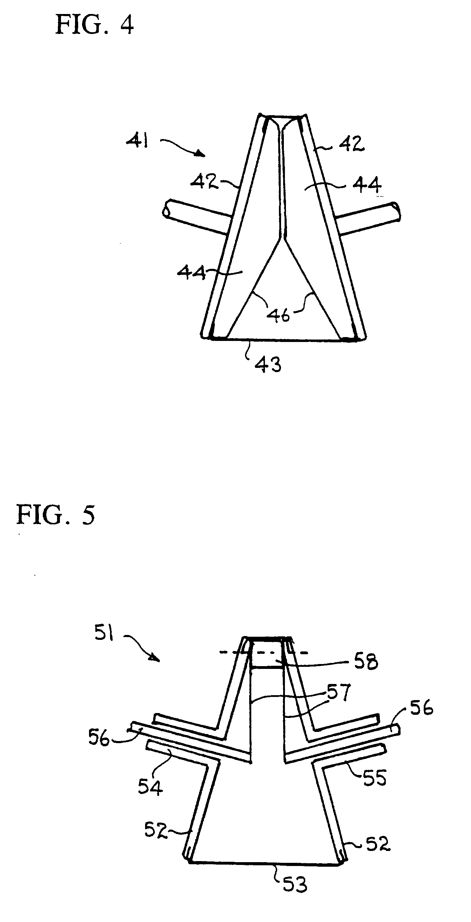

With reference to Figure 4, there is shown a drum 41 in which the elastomeric sleeve 43 may be supported on at least the internal surface of its lower portion by shaped inserts 44 which may reduce the volume of pressurised air within the drum. Furthermore, the two ends 42 of the drum could be rotationally linked through conical surfaces 46 on the two inserts 44, instead of using the separate joint 6 as shown in Figure 1.

With reference to Figure 5, a pair of stationary radial arms 57 and a support roller 58 are housed within the drum 51. The support roller 58 is free to rotate about an axle extending between the two radial arms 57 to internally support the upper part of the sleeve 53. The arms 57 are mounted on non-rotary shafts 56 that pass through rotatable hollow shafts 54,55 forming parts of the ends 52.

## Claims

1. A process for the production of oriented cellulosic film, the process comprising extruding or casting a web (20) of a solution of a cellulosic material in a solvent therefor onto an extensible surface (3) to which it adheres, stretching the web (20) in at least one direction by stretching the extensible surface (3) in at least one said direction, and removing solvent from the web (20).

2. A process according to claim 1, wherein the web (20) is formed by extrusion through a slot die, the formed web (20) is sequentially stretched firstly in the direction of extrusion and thereafter transversely to the direction of extrusion, and solvent is removed from the web (20) to produce a film of biaxially oriented cellulose.

3. A process according to claim 2, wherein stretching of the web (20) in the transverse direction is effected with the web (20) being in contact with the extensible surface (3).

4. A process according to any of claims 1 to 3, wherein the extensible surface (3) is formed on an elastomeric sleeve (3).

5. A process according to any of claims 1 to 4, wherein stretching of the web (20) in the direction of web extrusion is effected by moving the extensible surface (3) relative to the slot die at a faster rate than the cellulose solution is extruded from the said die.

6. A process according to any of claims 1 to 5, wherein the web (20) is stretched in the direction of extrusion by a factor of from 1.5:1 to 25:1.

7. A process according to any of claims 1 to 6, wherein the web (20) is stretched in a direction substantially perpendicular to the direction of extrusion by a factor from 1.5:1 to 8:1.

8. A process according to any of claims 1 to 7, wherein the web (20) is stretched in two directions so as to provide substantially balanced properties in the two directions of stretching.

9. A process according to any of claims 1 to 8, wherein the solution of a cellulose material is cellulose dissolved in a tertiary amine oxide solvent.

10. A process according to claim 9, wherein the tertiary amine oxide is N-methylmorpholine N-oxide.

11. A process according to any of claims 1 to 10, wherein the solvent is removed using water or some other non-solvent or a dilute solution of the solvent in water or non-solvent (13).

12. Apparatus for the production of oriented film, the apparatus including an expandable surface (3) onto which a web (20) of polymer solution can be extruded or cast and to which it adheres, the surface (3) being expandable to stretch the web (20) adhered thereto in at least one direction.

13. Apparatus according to claim 12, in which the expandable surface (3) is a surface on an elastomeric means (3).

14. Apparatus according to claim 13, wherein the elastomeric means (3) is in the form of a cylindrical sleeve (3).

15. Apparatus according to claim 14, wherein the cylindrical sleeve (3) has substantially rigid ends (2) inclined relative to each other and wherein stretching of the sleeve (3) is effected by rotation of said rigid ends (2) with each other.

16. Apparatus according to claim 15, wherein the angle (*θ*) between said substantially rigid ends (2) is adjustable to enable the degree of transverse stretch to be adjusted.

17. Apparatus according to any of claims 12 to 16, further including extrusion means (10) for extruding a substantially flat web (20) onto the expandable surface (3), the expandable surface (3) being movable away from the extrusion means (10) at a faster rate than the solution is extruded and being expandable in a direction perpendicular to the direction of extrusion.

18. Apparatus according to any of claims 12 to 16, further including means for removal of solvent from the web (20), said means comprising a bath (12) for water or a dilute solution of the solvent in water (13).

19. Apparatus according to any of claims 12 to 18, including means (18) for drying the expandable surface (3) before the web (20) makes contact therewith.

## Patentansprüche

1. Verfahren zur Herstellung von orientierter Cellulosefolie, bei dem man eine Bahn (20) aus einer Lösung eines Cellulosematerials in einem Lösungsmittel dafür auf eine dehnbare Oberfläche (3), auf der sie haftet, extrudiert oder aufgießt, die Bahn (20) in mindestens einer Richtung durch Verstrecken der dehnbaren Oberfläche (3) in der mindestens einen Richtung verstreckt und das Lösungsmittel von der Bahn (20) entfernt.

2. Verfahren nach Anspruch 1, bei dem man die Bahn (20) durch Extrusion durch eine Breitschlitzdüse bildet, die gebildete Bahn (20) nacheinander zunächst in Extrusionsrichtung und danach quer zur Extrusionsrichtung verstreckt und das Lösungsmittel von der Bahn (20) entfernt, was eine Folie aus biaxial orientierter Cellulose ergibt.

3. Verfahren nach Anspruch 2, bei dem die Bahn (20) beim Verstrecken in Querrichtung mit der dehnbaren Oberfläche (3) in Kontakt steht.

4. Verfahren nach einem der Ansprüche 1 bis 3, bei dem die dehnbare Oberfläche (3) auf einer elastomeren Hülse (3) ausgebildet ist.

5. Verfahren nach einem der Ansprüche 1 bis 4, bei dem man die Bahn (20) in Bahnextrusionsrichtung verstreckt, indem man die dehnbare Oberfläche (3) relativ zur Breitschlitzdüse schneller bewegt als die Celluloselösung aus der Düse extrudiert wird.

6. Verfahren nach einem der Ansprüche 1 bis 5, bei dem die Bahn (20) in Extrusionsrichtung um einen Faktor von 1,5:1 bis 25:1 verstreckt wird.

7. Verfahren nach einem der Ansprüche 1 bis 6, bei dem die Bahn (20) in einer weitgehend senkrecht zur Extrusionsrichtung verlaufenden Richtung um einen Faktor von 1,5:1 bis 8:1 verstreckt wird.

8. Verfahren nach einem der Ansprüche 1 bis 7, bei dem man die Bahn (20) so in zwei Richtungen verstreckt, daß man in den beiden Verstreckungsrichtungen weitgehend ausgeglichene Eigenschaften erhält.

9. Verfahren nach einem der Ansprüche 1 bis 8, bei dem man als Lösung eines Cellulosematerials in einem tertiären Aminoxid als Lösungsmittel gelöste Cellulose einsetzt.

10. Verfahren nach Anspruch 9, bei dem man als tertiäres Aminoxid N-Methylmorpholin-N-oxid einsetzt.

11. Verfahren nach einem der Ansprüche 1 bis 10, bei dem man das Lösungsmittel mit Wasser oder einem anderen Nichtlösungsmittel oder einer verdünnten Lösung des Lösungsmittels in Wasser oder Nichtlösungsmittel (13) entfernt.

12. Vorrichtung zur Herstellung von orientierter Folie mit einer dehnbaren Oberfläche (3), auf die eine Bahn (20) aus Polymerlösung extrudiert oder aufgegossen werden kann und auf der diese anhaftet, wobei die Oberfläche (3) so gedehnt werden kann, daß die darauf haftende Bahn (20) in mindestens einer Richtung verstreckt wird.

13. Vorrichtung nach Anspruch 12, bei der es sich bei der dehnbaren Oberfläche (3) um eine auf einer elastomeren Einrichtung (3) ausgebildete Oberfläche handelt.

14. Vorrichtung nach Anspruch 13, bei der die elastomere Einrichtung (3) als zylindrische Hülse (3) ausgebildet ist.

15. Vorrichtung nach Anspruch 14, bei der die zylindrische Hülse (3) gegeneinander geneigte, weitgehend starre Enden (2) aufweist und das Verstrecken der Hülse (3) durch Drehen der starren Enden (2) miteinander erfolgt.

16. Vorrichtung nach Anspruch 15, bei der der Winkel (θ) zwischen den weitgehend starren Enden (2) einstellbar ist, wodurch der Querverstreckungsgrad eingestellt werden kann.

17. Vorrichtung nach einem der Ansprüche 12 bis 16, die ferner eine Extrusionseinrichtung (10) zum Extrudieren einer weitgehend flachen Bahn (20) auf die dehnbare Oberfläche (3) aufweist, wobei die dehnbare Oberfläche (3) schneller von der Extrusionseinrichtung (10) weg bewegt werden kann als die Lösung extrudiert wird und in einer senrecht zur Extrusionsrichtung verlaufenden Richtung dehnbar ist.

18. Vorrichtung nach einem der Ansprüche 12 bis 16, die ferner eine Einrichtung zur Entfernung des Lösungsmittels von der Bahn (20) aufweist, die ein Bad (12) für Wasser oder eine verdünnte Lösung des Lösungsmittels in Wasser (13) aufweist.

19. Vorrichtung nach einem der Ansprüche 12 bis 18 mit einer Einrichtung (18) zum Trocknen der dehnbaren Oberfläche (3), bevor die Bahn (20) damit in Berührung kommt.

## Revendications

1. Procédé pour la production de film cellulosique orienté, le procédé comprenant l'extrusion ou le moulage d'une bande (20) d'une solution d'un matériau cellulosique dans un solvant de là sur une surface extensible (3) à laquelle elle adhère, l'étirage de la bande (20) dans au moins une direction en étirant la surface extensible (3) dans au moins ladite direction, et l'élimination du solvant de la bande (20).

2. Procédé selon la revendication 1, dans lequel la bande (20) est formée par extrusion à travers une filière droite, la bande formée (20) est séquentiellement étirée d'abord dans la direction d'extrusion et après cela transversalement à la direction d'extrusion, et le solvant est éliminé de la bande (20) pour produire un film de cellulose orienté biaxialement.

3. Procédé selon la revendication 2, dans lequel l'étirage de la bande (20) dans la direction transverse est effectué avec la bande (20) en contact avec la surface extensible (3).

4. Procédé selon l'une quelconque des revendications 1 à 3, dans lequel la surface extensible (3) est formée sur un manchon élastomère (3).

5. Procédé selon l'une quelconque des revendications 1 à 4, dans lequel l'étirage de la bande (20) dans la direction de l'extrusion de la bande est effectué en bougeant la surface extensible (3) par rapport à la filière droite à une vitesse plus rapide que celle à laquelle la solution de cellulose est extrudée de ladite filière.

6. Procédé selon l'une quelconque des revendications 1 à 5, dans lequel la bande (20) est étirée dans la direction d'extrusion d'un facteur de 1,5:1 à 25:1.

7. Procédé selon l'une quelconque des revendications 1 à 6, dans lequel la bande (20) est étirée dans une direction pratiquement perpendiculaire à la direction d'extrusion d'un facteur de 1,5:1 à 8:1.

8. Procédé selon l'une quelconque des revendications 1 à 7, dans lequel la bande (20) est étirée dans deux directions de manière à fournir des propriétés pratiquement équilibrées dans les deux directions d'étirage.

9. Procédé selon l'une quelconque des revendications 1 à 8, dans lequel la solution d'un matériau de cellulose est de la cellulose dissoute dans un solvant d'oxyde d'amine tertiaire.

10. Procédé selon la revendication 9, dans lequel l'oxyde d'amine tertiaire est le N-oxyde de N-méthylmorpholine.

11. Procédé selon l'une quelconque des revendications 1 à 10, dans lequel le solvant est éliminé en utilisant de l'eau ou un autre non-solvant ou une solution diluée de solvant dans l'eau ou de non-solvant (13).

12. Appareil pour la production de film orienté, l'appareil incluant une surface extensible (3) sur laquelle une bande (20) de solution de polymère peut être extrudée ou moulée et à laquelle elle adhère, la surface (3) étant extensible pour étirer la bande (20) collée dessus dans au moins une direction.

13. Appareil selon la revendication 12, dans lequel la surface extensible (3) est une surface d'une substance élastomère (3).

14. Appareil selon la revendication 13, dans lequel la substance élastomère (3) est sous la forme d'un manchon cylindrique (3).

15. Appareil selon la revendication 14, dans lequel le manchon cylindrique (3) a des extrémités pratiquement rigides (2) inclinées l'une par rapport à l'autre et dans lequel l'étirage du manchon (3) est effectué par rotation desdites extrémités rigides (2) l'une avec l'autre.

16. Appareil selon la revendication 15, dans lequel l'angle (θ) entre lesdites extrémités pratiquement rigides (2) est ajustable pour permettre d'ajuster le degré d'étirage transverse.

17. Appareil selon l'une quelconque des revendications 12 à 16, incluant en outre un système d'extrusion (10) pour extruder une bande pratiquement plate (20) sur la surface extensible (3), la surface extensible (3) étant mobile à partir du système d'extrusion (10) à une vitesse plus rapide que celle à laquelle la solution est extrudée et étant extensible dans une direction perpendiculaire à la direction d'extrusion.

18. Appareil selon l'une quelconque des revendications 12 à 16, incluant en outre un système pour éliminer le solvant de la bande (20), ledit système comprenant un bain (12) pour l'eau ou une solution diluée du solvant dans l'eau (13).

19. Appareil selon l'une quelconque des revendications 12 à 18, incluant un système (18) pour le séchage de la surface extensible (3) avant la mise en contact de la bande (20) avec elle.
